# EUROPÄISCHE PATENTSCHRIFT

(11) **EP 2 336 261 B1**
(45) Veröffentlichungstag und Bekanntmachung des Hinweises auf die Patenterteilung: **25.04.2012**
(21) Anmeldenummer: 09179940.3
(22) Anmeldetag: 18.12.2009
(51) Int. Cl.: C09J 151/06, B32B 27/32

(54) **Heissschmelzklebstoffzusammensetzungen mit guter Haftung sowohl auf polaren als auch apolaren Substraten**
Hot melt adhesive compounds with good adhesion on polar and apolar substrates
Compositions de colle de fusion à chaud ayant une bonne adhésion tant sur les substrats polaires qu'apolaires

(43) Veröffentlichungstag der Anmeldung: 22.06.2011
(73) Patentinhaber: Sika Technology AG, 6340 Baar (CH)
(72) Erfinder: Paschkowski, Kai, 21635, Jork (DE); Janke, Doreen, 25486 Alveslohe (DE)
(74) Vertreter: Dux, Roland

(56) Entgegenhaltungen:
- EP-A2- 0 827 994
- EP-A2- 2 113 994

## Beschreibung

### Technisches Gebiet

Die Erfindung betrifft das Gebiet der Heissschmelzklebstoffe insbesondere zum Verkleben von apolaren mit polaren Substraten.

### Stand der Technik

Heissschmelzklebstoffe sind seit langem bekannt. Wenn der geschmolzene Klebstoff in einer dünnen Schicht aufgetragen wird, besteht jedoch das grosse Problem, dass diese Klebstoffe eine geringe Offenzeit aufweisen, d.h. dass der Klebstoff in dünnen Schichten so schnell abkühlt und sich dabei sich so verfestigt, dass der Klebstoff die Oberfläche des Fügepartners nicht mehr benetzt und somit sich kein Klebverbund mehr bilden kann. Dies ist insbesondere der Fall bei Heissschmelzklebstoffen, welche auf amorphen Thermoplasten basieren. Ein weiterer Nachteil dieser Art Heissschmelzklebstoffe ist das Problem, dass die Klebstoffe auch nach der Applikation thermoplastisch sind. Dies führt dazu, dass der Klebstoff in einem Klebverbund beim Erhitzen des Klebverbundes wieder aufschmilzt, wodurch der Verbund bei Belastung zerstört wird.

Polyurethan-Heissschmelzklebstoffe sind reaktive Heissschmelzklebstoffe und werden bevorzugt, weil sie nach der Applikation mit Feuchtigkeit reagieren und vernetzen und sich somit sehr wärmestabile Verklebungen realisieren lassen. Diese Klebstoffe sind jedoch unmittelbar nach Applikation äusserst weich und bauen ihre Festigkeit erst mit der Zeit auf, d.h. wenn sie vernetzen. Reaktive Polyurethan-Heissschmelzklebstoffe weisen somit in dünnen Schichten zwar eine lange Offenzeit auf, haben aber das grosse Problem einer geringen Anfangsfestigkeit.

Heissschmelzklebstoffe basierend auf Silangepfropften Poly-α-olefinen sind dem Fachmann zum Beispiel aus US 5,994,747 und DE 40 00 695 A1 bekannt. Diese Klebstoffe weisen sehr interessante Eigenschaften auf, denn einerseits sind diese Heissschmelzklebstoffe ebenfalls reaktive Heissschmelzklebstoffe, wodurch hohe Festigkeit und grosse Wärmestabilität erreicht werden kann. Andererseits ist auch die Anfangsfestigkeit sehr hoch. Allerdings weisen auch diese Klebstoffe in dünnen Schichten eine sehr kurze Offenzeit auf, was ihrer Verwendung als Kaschierklebstoffe ohne eine vorgängige Reaktivierung (Wiederaufschmelzung) bisher abträglich war.

Diese Klebstoffe weisen jedoch auch noch einige Nachteile auf. Insbesondere zeigen sie zwar im Allgemeinen eine gute Haftung zu apolaren Oberflächen wie Polypropylen oder Polyethylen, andererseits ist die Haftung zu polaren Substraten hingegen jedoch sehr gering.

EP 2 113 545 A1 beschreibt einen reaktiven Heissschmelzklebstoff, welcher eine lange Offenzeit und gute Haftung zu apolaren, jedoch lediglich eine geringe Haftung zu polaren Substraten aufweist.

Für die Gewährleistung eines Verbundes von polaren und apolaren Substraten ist jedoch eine gute Haftung auf beiden Substraten eine unabdingbare Vorbedingung.

### Darstellung der Erfindung

Aufgabe der vorliegenden Erfindung ist es daher, einen Heissschmelzklebstoff zur Verfügung zu stellen, welcher sowohl auf polaren als auch apolaren Substraten gut haftet, auch in dünnen Schichten eine verlängerte Offenzeit aufweist, aber trotzdem schnell eine grosse Frühfestigkeit aufbaut.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft in einem ersten Aspekt Heissschmelzklebstoffzusammensetzung. Diese Heissschmelzklebstoffzusammensetzung umfasst
a) mindestens ein thermoplastisches, bei 25°C festes silangepfropftes Poly-α-olefin **(P)**;
b) mindestens ein Reaktionsprodukt (R**P**) eines Polyisocyanates mit einem Isocyanat-reaktivem Silan (S).
wobei das Isocyanat-reaktive Silan (**S**) genau eine Isocyanatgruppen-reaktiven Gruppe, welche ausgewählt ist aus der Gruppen bestehend aus Hydroxylgruppe, Mercaptogruppe und Aminogruppe, aufweist und wobei das Reaktionsprodukt ein Molekulargewicht M_{w} von weniger als 1'500 g/mol aufweist.

Unter einem "α-Olefin"α wird in diesem Dokument in üblicher Definition ein Alken der Summenformel CₓH₂ₓ (x entspricht der Anzahl Kohlenstoffatome) verstanden, welches eine C-C-Doppelbindung am ersten Kohlenstoffatom (α-Kohlenstoff) aufweist. Beispiele für α-Olefine sind Ethylen, Propylen, 1-Buten, 2-Methyl-1-Propen (=Isobutylen), 1-Penten, 1-Hexen, 1-Hepten und 1-Octen. Somit stellen beispielsweise weder 1,3-Butadien noch 2-Buten oder Styrol α-Olefine im Sinne dieses Dokumentes dar.

Unter "Poly-α-olefinen" werden in diesem Dokument in üblicher Definition Homopolymere aus α-Olefinen und Copolymere aus mehreren verschiedenen α-Olefinen verstanden. Sie weisen gegenüber anderen Polyolefinen eine amorphe Struktur auf.

Mit "Poly" beginnende Substanznamen wie Polyol, Polyisocyanat oder dergleichen bezeichnen im vorliegenden Dokument Substanzen, die formal zwei oder mehr der in ihrem Namen vorkommenden funktionellen Gruppen pro Molekül enthalten.

Der Begriff "Polyisocyanat" umfasst im vorliegenden Dokument Verbindungen mit zwei oder mehr Isocyanatgruppen

Mit dem Begriff "Silan" wird im vorliegenden Dokument eine Silicium-haltige Verbindung bezeichnet, in der das Silicium-Atom sowohl mindestens einen, insbesondere zwei oder drei, Alkoxygruppen als auch mindestens einen direkt gebundenen organischen Rest trägt und somit mindestens eine Si-C-Bindung aufweist. Entsprechend dazu bezeichnet der Begriff "Silangruppe" die an den organischen Rest des Silans gebundene Silicium-haltige Gruppe. Silane, beziehungsweise deren Silangruppen, haben die Eigenschaft, bei Kontakt mit Feuchtigkeit zu hydrolysieren und dabei den entsprechenden Alkohol freizusetzen. Somit sind insbesondere Siloxane oder Silicone nicht als Silane im Sinne der vorliegenden Erfindung zu betrachten.

Die fett markierten Bezeichnungen wie **P, RP, S, P', S1, S2, K, K'** oder dergleichen im vorliegenden Dokument dienen lediglich für das bessere Leseverständnis und Identifizierung.

Die Heissschmelzklebstoffzusammensetzung enthält ein thermoplastisches, silangepfropftes Poly-α-olefin (**P**), welches bei 25°C fest ist.

Bevorzugt weist das silangepfropfte Poly-α-olefin (**P**) eine Erweichungstemperatur zwischen 60°C und 160°C, insbesondere zwischen 80°C und 140°C, bevorzugt zwischen 90°C und 120°C, auf.

Der Erweichungspunkt wird hierbei gemessen durch die Ring & KugelMethode, z.B. in Anlehnung an DIN EN 1238.

Derartige silangepfropfte Poly-α-olefine (**P**) sind dem Fachmann bestens bekannt. Sie lassen sich beispielsweise durch eine Aufpfropfung von ungesättigten Silan, wie Vinyltrimethoxysilan, auf ein Poly-α-olefin erhalten. Eine detaillierte Beschreibung zur Herstellung derartiger silangepfropfter Poly-α-olefine ist beispielsweise in US 5,994,747 und DE 40 00 695 A1 offenbart.

Bevorzugt ist das silangepfropfte Poly-α-olefin (**P**) ein silangepfropftes Copolymer oder Terpolymer aus mindestens einem der Monomeren, welche ausgewählt sind aus der Gruppe bestehend aus Ethylen, Propylen, Butylen und Isobutylen. Besonders geeignet ist das silangepfropfte Poly-α-olefin (**P**) ein silangepfropftes Polyethylen oder Polypropylen.

Es hat sich als besonders vorteilhaft erwiesen, dass das silangepfropfte Poly-α-olefin (**P**) ein silangepfropftes ataktisches Poly-α-olefin (APAO) ist.

In einer bevorzugten Ausführungsform ist das Poly-α-olefin (**P**) durch Aufpfropfung von Silanen auf ein Poly-α-olefin, welches seinerseits nach dem Ziegler-Natta-Verfahren hergestellt wurde, hergestellt.

Weiterhin kann das silangepfropfte Poly-α-olefine (**P**) ein silangepfropftes Poly-α-olefin sein, welches ein mittels Metallocen-Katalysatoren hergestellte Poly-α-olefin ist, auf welches Silangruppen aufgepfropft wurde. Insbesondere sind dies silangepfropfte Polypropylen-Homopolymere oder Polyethylen-Homopolymere.

Der Pfropfungsgrad des silangepfropfte Poly-α-olefin (**P**) ist vorteilhaft über 1 Gew.-%, insbesondere über 3 Gew.-%, Silan bezogen auf das Gewicht des Poly-α-olefins. Vorzugsweise beträgt dieser Pfropfungsgrad zwischen 2 und 15 Gew.-%, bevorzugt zwischen 4 und 15 Gew.-%, meist bevorzugt zwischen 8 und 12 Gew.-%. Wenn für das silangepfropfte Poly-α-olefine über Metallocen-Katalysatoren hergestellte Poly-α-olefine verwendet werden, beträgt der Pfropfungsgrad vorzugsweise zwischen 8 und 12 Gew.-%.

Besonders vorteilhaft ist es, wenn die Heissschmelzklebstoffzusammensetzung mindestens zwei verschiedene silangepfropfte Poly-α-olefine (**P**) aufweist.

Besonders vorteilhaft hat sich erwiesen, wenn die Heissschmetzklebstoffzusammensetzung mindestens ein Poly-α-olefin (**P**), welches durch Aufpfropfung von Silanen auf ein Poly-α-olefin, welches seinerseits nach dem Ziegler-Natta-Verfahren hergestellt wurde, hergestellt wurde sowie mindestens ein silangepfropftes Poly-α-olefin (**P**), welches mittels Metallocen-Katalysatoren hergestellte Poly-α-olefine sind, auf welche Silangruppen aufgepfropft wurden, aufweist.

Der Anteil aller silangepfropften Poly-α-olefine (**P**) beträgt typischerweise über 40 Gew.-%, bevorzugt 50 bis 80 Gew.-%.

Es hat sich gezeigt, dass es vorteilhaft ist, wenn die Heissschmelzklebstoffzusammensetzung weiterhin ein bei Raumtemperatur festes thermoplastisches Poly-α-olefin (**P'**), insbesondere ein ataktisches Poly-α-olefin (APAO), enthält.

Bevorzugt weisen die festen thermoplastischen ataktischen Poly-αolefine (P') einen Erweichungspunkt von über 90°C, insbesondere zwischen 90°C und 130°C auf. Das Molekulargewicht Mₙ beträgt insbesondere zwischen 7'000 und 25'000 g/mol. Es kann vorteilhaft sein, wenn für die Herstellung der ataktischen Poly-α-olefine (**P'**) Metallocen-Katalysatoren verwendet werden.

Besonders bevorzugt ist das Gewichtsverhältnis von festem silangepfropften Poly-α-olefin (**P**) zu festem thermoplastischen Poly-α-olefin (**P'**) zwischen 1:1 und 20:1. Als besonders geeignet gezeigt hat sich ein Anteil an festem thermoplastischen Poly-α-olefin (**P'**) von 5 bis 40 Gew.-%, bevorzugt 15 bis 35 Gew.-%, bezogen auf die Heissschmelzklebstoffzusammensetzung.

Die Heissschmelzklebstoffzusammensetzung enthält weiterhin mindestens ein Reaktionsprodukt (**RP**) eines Polyisocyanates mit einem Isocyanat-reaktivem Silan (**S**). Es ist hierbei für das Wesen der Erfindung wesentlich, dass das Isocyanat-reaktive Silan (**S**) genau eine Isocyanatgruppen-reaktiven Gruppe, welche ausgewählt ist aus der Gruppen bestehend aus Hydroxylgruppe, Mercaptogruppe und Aminogruppe, aufweist und wobei das Reaktionsprodukt ein Molekulargewicht M_{w} von weniger als 1'500 g/mol aufweist.

Somit sind insbesondere einerseits Isocyanat-reaktive Silane nicht geeignet, welche mehrere Isocyanat-reaktive Gruppen aufweisen, wie beispielsweise N-(2-Aminoethyl)-3-aminopropyl-trimethoxysilan. Würden nämlich derartige Silane verwendet, würden die Polyisocyanate mehrmals reagieren und zu hoch vernetzten Produkten.

Andererseits sind als Reaktionsprodukt (**RP**) insbesondere hochmolekulare Reaktionsprodukte (d.h. Molekulargewicht M_{w} > 1500 g/mol) zwischen Polyisocyanat und Isocyanat-reaktivem Silan nicht geeignet. Insbesondere ungeeignet sind Silan-terminierte Polyurethanprepolymere (vielfach auch abgekürzt als S-PUR), wie sie in Raumtemperatur härtenden Polyurethandichtstoffen häufig eingesetzt werden. Werden derartige hochmolekulare Reaktionsprodukte alleine -d.h. ohne die Kombination mit den erfindungsgemässen Reaktionsprodukten (**RP**)- eingesetzt, dann weissen die entsprechenden Heissschmelzklebstoffzusammensetzungen keine oder zumindest ungenügende Haftung auf polaren Substraten, wie sie weiter hinten noch näher erläutert werden, auf.

Es ist vorteilhaft, dass das Reaktionsprodukt (**RP**) die Viskosität der Heissschmelzklebstoffzusammensetzung nicht oder nur geringfügig erhöht. Somit ist es besonders vorteilhaft, wenn das Reaktionsprodukt (**RP**) ein möglichst geringe Viskosität, insbesondere unter 1 Pa·s bei 40°C, aufweist.

Das Reaktionsprodukt (**RP**) wird insbesondere in einer Menge von 3 - 50 Gewichts-%, bevorzugt von 4 - 20 Gewichts-%, mehr bevorzugt von 4 -10 Gewichts-%, bezogen auf die gesamte Heissschmelzklebstoffzusammensetzung eingesetzt.

Es hat sich weiterhin gezeigt, dass durch den Zusatz des Reaktionsproduktes (**RP**) die Offenzeit nur unwesentlich verkürzt.

Als für die Bildung des Reaktionsproduktes (**RP**) geeignetes Isocyanat-reaktives Silan (**S**) ist insbesondere eine Verbindung der Formel (I).

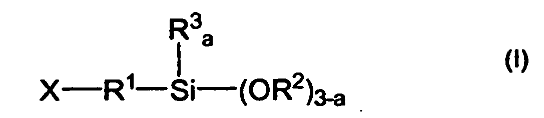

Hierbei steht R¹ für eine lineare oder verzweigte, gegebenenfalls cyclische, Alkylengruppe mit 1 bis 20 C-Atomen steht, gegebenenfalls mit aromatischen Anteilen. Weiterhin steht R² für eine Alkylgruppe mit 1 bis 5 C-Atomen, insbesondere für eine Methyl- oder Ethylgruppe, oder eine Acylgruppe. R³ steht für eine Alkylgruppe mit 1 bis 8 C-Atomen, insbesondere für eine Methylgruppe. Weiterhin steht a für einen der Werte 0, 1 oder 2, bevorzugt 0 oder 1. Meist bevorzugt steht a für 0.Schließlich steht X für eine Isocyanat-reaktive Gruppe, welche ausgewählt ist aus der Gruppe bestehend aus -OH, -SH, -NH₂ und -NHR⁴.

Hierbei steht R⁴ entweder für wiederum für einen Alkylrest mit 1 bis 12 C-Atomen oder für einen cycloaliphatischen oder aromatischen Rest mit 6 bis 12 C-Atomen. Oder R⁴ steht für einen Substituent der Formel (II).

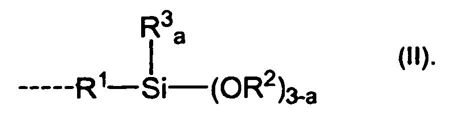

Die gestrichelten Linien in den Formeln in diesem Dokument stellen jeweils die Bindung zwischen einem Substituenten und dem zugehörigen Molekülrest dar.

Insbesondere sind geeignete Isocyanat-reaktive Silan **(S):** 3-Aminopropyltrimethoxysilan, 3-Aminopropyltriethoxysilan, 3-Aminopropyl-dimethoxymethylsilan, 3-Amino-2-methylpropyl-trimethoxysilan, 4-Aminobutyltrimethoxysilan, 4-Aminobutyl-dimethoxymethylsilan, 4-Amino-3-methylbutyltrimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyldimethoxymethylsilan, Aminomethyl-trimethoxysilan, Aminomethyl-dimethoxymethylsilan, Aminomethylmethoxydimethylsilan, 7-Amino-4-oxaheptyldimethoxymethylsilan, N-(Methyl)-3-aminopropyltrimethoxysilan, N-(n-butyl)-3-aminopropyltrimethoxysilan Bis-[3-(trimethoxysilyl)-propyl]-amin, Bis-[3-(tri-ethoxysilyl)-propyl]-amin;
3-Mercaptopropyltriethoxysilan, 3-Mercaptopropyltrimethoxysilan, 3-mercaptopropyltriisopropoxysilan, 3-Mercaptopropyldiethoxymethylsilan, 3-Mercaptopropyldimethoxymethylsilan, 3-Mercaptopropyldiisopropoxmethylsilan, 3-Mercaptomethyltrimethoxysilan, 3-Mercaptomethyltriethoxysilan, 3-Mercaptomethyltriisopropoxysilan, Mercaptomethyl-dimethoxymethylsilan, Mercaptomethyl-diethoxymethylsilan, 3-Mercaptopropyl-methyldimethoxysilan, 3-Mercaptopropyl-methoxy(1,2-ethylendioxy)-silan, 3-Mercaptopropyl-methoxy(1,2-propylendioxy)-silan, 3-Mercaptopropyl-ethoxy(1,2-propylendioxy)-silan, 3-Mercaptopropyl-dimethoxymethylsilan, 3-Mercaptopropyl-diethoxymethylsilan, 3-Mercapto-2-methylpropyl-trimethoxysilan und 4-Mercapto-3,3-dimethylbutyl-trimethoxysilan.

Bevorzugte Isocyanat-reaktive Silane **(S)** sind 3-Mercaptopropyltriethoxysilan und 3-Mercaptopropyltrimethoxysilan, meist bevorzugt 3-Mercaptopropyltrimethoxysilan.

Als für die Herstellung des Reaktionsproduktes **(RP)** eingesetzte Polyisocyanat sind 2,4- und 2,6-Toluylendiisocyanat (TDI) und beliebige Gemische dieser Isomeren, 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, Naphthalin-1,5-diisocyanat (NDI), 3,3'-Dimethyl-4,4'-diisocyanatodiphenyl (TODI), 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und Cyclohexan-1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (m- und p-XDI), m-Tetramethyl-1,3- und m-Tetramethyl-1,4-xylylendiisocyanat und p-Tetramethyl-1,3- und m-Tetramethyl-1,4-xylylendiisocyanat (m- und p-TMXDI).

Weiterhin geeignete Polyisocyanat sind die Isocyanurate und Biurete dieser soeben genannten Polyisocyanate.

Als für die Herstellung des Reaktionsproduktes **(RP)** eingesetzte Polyisocyanat sind besonders geeignet Polyisocyanate, welche ausgewählt sind aus der Gruppe bestehend aus 4,4'-, 2,4'- und 2,2'-Diphenylmethandiisocyanat (MDI), 2,4- und 2,6-Toluylendiisocyanat (TDI), 1,6-Hexamethylendiisocyanat (HDI), 1-Isocyanato-3,3,5-trimethyl-5-isocyanatomethyl-cyclohexan (=Isophorondiisocyanat oder IPDI); Isocyanurate von MDI, TDI, HDI oder IPDI, sowie Biurete von MDI, TDI, HDI und/oder IPDI.

Für die Bildung des Reaktionsproduktes **(RP)** werden mindestens ein Isocyanat-reaktives Silan **(S)** mit mindestens einem Polyisocyanat in an und für sich bekannter Art und Weise miteinander umgesetzt. Erfolgt die Umsetzung in ein stöchiometrischen Überschuss der Isocyanatgruppen gegenüber der Isocyanatgruppen-reaktiven Gruppe des Isocyanat-reaktiven Silans **(S),** werden nicht alle Isocyanatgruppen abreagiert, d.h. das Reaktionsprodukt **(RP)** weist sowohl Isocyanatgruppen als auch Silangruppen auf. Im bevorzugten Fall, dass das Polyisocyanat ein Diisocyanat ist und das Isocyanat-reaktive Silan eine Silangruppe trägt ist, bedeutet dies, dass das gebildete Reaktionsprodukt **(RP)** genau eine Silangruppe und eine Isocyanatgruppe trägt.

Bevorzugt ist es jedoch, dass die Umsetzung stöchiometrisch, mehr bevorzugt in einem stöchiometrischen Unterschuss, der Isocyanatgruppen gegenüber der Isocyanatgruppen-reaktiven Gruppe des Isocyanat-reaktiven Silans **(S)** erfolgt. Dies gewährleistet, dass im Wesentlichen alle Isocyanatgruppen abreagieren.

Somit weist das Reaktionsprodukt **(RP)** eines Polyisocyanates mit einem Isocyanat-reaktivem Silan **(S)** bevorzugt keine Isocyanatgruppen auf.

Als die bevorzugten Reaktionsprodukte **(RP)** gelten Reaktionsprodukte von 4,4'-, 2,4'- oder 2,2'-Diphenylmethandiisocyanat (MDI) mit einem 3-Mercaptopropyltrimethoxysilan, 3-Mercaptopropyltriethoxysilan oder 3-Mercaptopropyl-dimethoxymethylsilan.

Meist bevorzugt ist das Reaktionsprodukt **(RP)** ein Reaktionsprodukt von 4,4'-, 2,4'- oder 2,2'-Diphenylmethandiisocyanat (MDI) mit einem 3-Mercaptopropyltrimethoxysilan, 3-Mercaptopropyltriethoxysilan oder 3-Mercaptopropyl-dimethoxymethylsilan, hergestellt in einem stöchiometrisch Überschuss der Isocyanat-reaktiven Gruppen des Isocyanat-reaktiven Silans (S) gegenüber den Isocyanatgruppen des Polyisocyanates.

Die Heissschmelzklebstoffzusammensetzung kann weiterhin noch zusätzlich mindestens einen Haftvermittler der Formel (III) aufweisen.

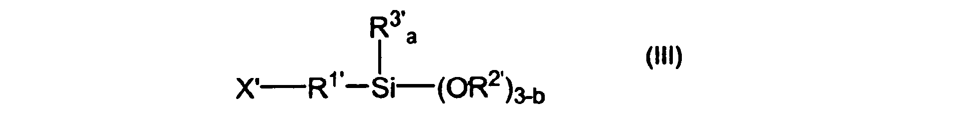

Hierbei steht R^{1'} für eine lineare oder verzweigte, gegebenenfalls cyclische, Alkylengruppe mit 1 bis 20 C-Atomen steht, gegebenenfalls mit aromatischen Anteilen und/oder Heteroatomen, insbesondere in Form von Amin-Stickstoffatomen. R^{2'} steht für eine Alkylgruppe mit 1 bis 5 C-Atomen, insbesondere für eine Methyl- oder Ethylgruppe, oder eine Acylgruppe und R^{3'} steht für eine Alkylgruppe mit 1 bis 8 C-Atomen, insbesondere für eine Methylgruppe. Weiterhin steht b für einen der Werte 0, 1 oder 2, bevorzugt 0 oder 1. Meist bevorzugt steht b für 0. Schliesslich steht X' für eine Gruppe, welche ausgewählt ist aus der Gruppe bestehend aus -OH, -SH, -NH₂, -NHR^{4'}, Glycidyloxy-, (Meth)acryloxy-, Acylthio- und Vinylgruppe.

R^{4'} steht seinerseits entweder für einen Alkylrest mit 1 bis 12 C-Atomen oder für einen cycloaliphatischen oder aromatischen Rest mit 6 bis 12 C-Atomen. Oder R^{4'} steht für einen Substituent der Formel (IV).

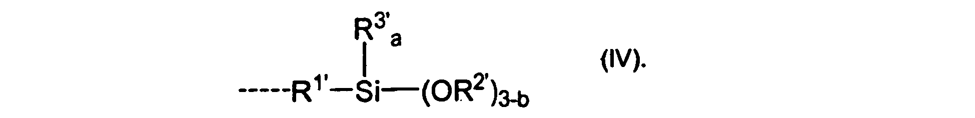

Der Haftvermittler der Formel (III) steht insbesondere für einen Haftvermittler, welcher ausgewählt ist aus der Gruppe bestehend aus::
3-Glycidyloxypropyltrimethoxysilan, 3-Glycidyloxypropyltriethoxysilan; 3-Methacryloxypropyltrialkoxysilane, 3-Methacryloxypropyltriethoxysilan, 3-Methacryloxypropyltrimethoxysilan; 3-Aminopropyltrimethoxysilan, 3-Aminopropyltriethoxysilan, 3-Aminopropyl-dimethoxymethylsilan, 3-Amino-2-methylpropyl-trimethoxysilan, N-(2-Aminoethyl)-3-aminopropyl-trimethoxysilan, N-(2-Aminoethyl)-3-aminopropyl-tri-ethoxysilan, N-(2-Aminoethyl)-3-aminopropyl-dimethoxymethylsilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan, N-(Methyl)-3-aminopropyltrimethoxysilan, N-(n-butyl)-3-aminopropyltrimethoxysilan, Bis-[3-(trimethoxysilyl)-propyl]-amin, Bis-[3-(tri-ethoxysilyl)-propyl]-amin,
3-Mercaptopropyltriethoxysilan, 3-Mercaptopropyltrimethoxysilan, 3-Mercaptopropyl-methyldimethoxysilan;
3-Acylthiopropyltrimethoxysilan;
Vinyltrimethoxysilan und Vinyltriethoxysilan.

Falls es sich beim Haftvermittler der Formel (III) um ein Isocyanat-reaktives Silan **(S)** der Formel (I) handelt, kann dieser Haftvermittler entweder nachträglich in die Heissschmelzklebstoffzusammensetzung eingebracht werden, oder aber er kann bereits bei der Herstellung des Reaktionsproduktes **(RP)** eingebracht werden. Wird bei der Herstellung des Reaktionsproduktes nämlich ein stöchiometrischer Überschuss des ein Isocyanat-reaktives Silan **(S)** der Formel (I) verwendet, verbleibt zwangsläufig das überschüssige Isocyanat-reaktive Silan **(S)** in der Reaktionsmischung des Reaktionsproduktes **(RP)** und kann somit ohne Abtrennung des gebildeten Reaktionsproduktes **(RP)** für die Heissschmelzklebstoffzusammensetzung verwendet werden.

Typischerweise liegt die Menge aller Haftvermittlers der Formel (III) unter 10 Gew.-%, insbesondere zwischen 0.1 und 8 Gew.-%, bevorzugt zwischen 0.2 und 6 Gew.-%, bezogen auf das Gewicht der Heissschmelzklebstoffzusammensetzung.

Die Heissschmelzklebstoffzusammensetzung enthält weiterhin vorzugsweise zusätzlich mindestens ein Harz **(H)** mit einem Schmelzpunkt oder Erweichungspunkt zwischen -10°C und 95°C aufweisen. Aufgrund der Tatsache, dass sich das Harz **(H)** bei Raumtemperatur (23°C) sehr nahe am Schmelz- oder Erweichungspunkt befindet, ist es bei Raumtemperatur entweder bereits flüssig oder sehr weich. Ein Harz kann ein natürliches Harz oder synthetisches Harz sein.

Insbesondere sind derartige Harze (H) mittel- bis höhermolekulare Verbindungen aus den Klassen der Parafin-, Kohlenwasserstoffharze, Polyolefine, Polyester, Polyether, Poly(meth)acrylate oder Aminoharze.

Das Harz **(H)** weist vorzugsweise einen Schmelzpunkt oder Erweichungspunkt zwischen 0°C und 95°C, insbesondere 10°C und 25°C, auf.

In einer, bevorzugten, Ausführungsform ist das Harz **(H)** ein Kohlenwasserstoffharz, insbesondere ein aliphatisches C₅-C₉-Kohlenwasserstoffharz oder ein aromatisch modifiziertes C₅-C₉-Kohlenwasserstoffharz ist.

Besonders geeignet als Harz **(H)** hat sich ein aliphatisches C₅-Kohlenwasserstoffharz gezeigt, welches unter dem Handelsnamen Wingtack® 10 oder WingTack® 86 von der Firma Cray Valley kommerziell vertrieben wird.

Weitere geeignete Harze sind beispielsweise Polyterpenharze, wie sie beispielsweise als Sylvares® TR A25 von Arizona Chemical, USA, kommeziell vertrieben werden, Rosinester und Tallharzester, wie sie beispielsweise als Sylvatac® RE 12, Sylvatac® RE 10, Sylvatac® RE 15, Sylvatac® RE 20, Sylvatac® RE 25 oder Sylvatac® RE 40 von Arizona Chemical, USA, kommerziell vertrieben werden.

Weitere geeignete Harze sind beispielsweise Escorez™ 5040 (Exxon Mobil Chemical).

Als Harze weiter geeignete Kohlenwasserstoffharze sind beispielsweise Picco A10 (Eastman Kodak) und Regalite R1010 (Eastman Kodak).

Der Anteil aller Harze (H) beträgt typischerweise 5 - 30 Gew.-%, insbesondere 8 - 20 Gew.-%, bezogen auf die Heissschmelzklebstoffzusammensetzung.

Die Heissschmelzklebstoffzusammensetzung kann weiterhin noch zusätzlich mindestens ein silanfunktionelles Polyoxyalkylen-Prepolymer aufweisen.

Derartige silanfunktionelle Polyoxyalkylen-Prepolymer sind bekannt aus dem Einsatz in Raumtemperatur härtenden Polyurethandichtstoffen häufig eingesetzt werden aufweisen.

In einer Ausführungsform ist das silanfunktionelle Polyoxyalkylen-Prepolymer ein silanfunktionellen Polyurethanpolymer **(STP1),** welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Das Isocyanatgruppen aufweisende Polyurethanpolymer ist seinerseits aus Umsetzung von mindestens einem Polyoxyalkylenpolyol mit mindestens einem Polyisocyanat, insbesondere wie sie vorgängig für die Herstellung des Reaktionsproduktes (RP) beschreiben wurden, erhältlich. Polyoxyalkylenpolyole, auch Polyetherpolyole oder Oligoetherole genannt, sind Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxyethylen- und Polyoxypropylendi- und -triole. Speziell geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.

In weiteren Ausführungsform ist das silanfunktionelle Polyoxyalkylen-Prepolymer ein silanfunktionelles Polyurethanpolymer **(STP2),** welches erhältlich ist durch die Umsetzung eines Isocyanatosilans, mit einem Polyoxyalkylen-Prepolymer, welches gegenüber Isocyanatgruppen reaktive funktionelle Endgruppen, insbesondere Hydroxylgruppen, Mercaptogruppen und/oder Aminogruppen, aufweist. Bevorzugt ist das Polyoxyalkylen-Prepolymer ein Polyoxyalkylenpolyole, wie sie für die Herstellung des soeben beschriebenen silanfunktionellen Polyurethanpolymers **(STP1)** offenbart worden sind.

In einer weiteren Ausführungsform schliesslich ist das silanfunktionelle Polyoxyalkylen-Prepolymer ein silanfunktionellen Polyoxyalkylen-Prepolymer **(STP3),** welches erhältlich ist durch eine Hydrosilylierungsreaktion von Polyoxyalkylen-Prepolymer mit endständigen Doppelbindungen, beispielsweise insbesondere von allylterminierten Polyoxyalkylenpolymeren, beschrieben beispielsweise in US 3,971,751 und US 6,207,766, deren Offenbarung hiermit eingeschlossen ist. Beispielsweise sind geeignete silanfunktionelle Polymere **(STP3)** kommerziell erhältlich unter dem Handelsnamen MS-Polymer^{®}, insbesondere als MS-Polymer^{®} S203H, S303H, S227, S810, MA903 und S943, Silyl^{®} SAX220, SAX350, SAX400 und SAX725, Silyl^{®} SAT350 und SAT400, sowie XMAP^{®} SA100S und SA310S von der Firma Kaneka Corp., Japan, sowie unter den Handelsnamen Excestar^{®} S2410, S2420, S3430, S3630, W2450 und MSX931 von der Firma Asahi Glass Co, Ltd., Japan.

Typischerweise liegt die Menge aller dieser silanfunktionellen Polyoxyalkylen-Prepolymere unter 50 Gew.-%, insbesondere zwischen 1 und 40 Gew.-%, bevorzugt zwischen 5 und 30 Gew.-%, bezogen auf das Gewicht der Heissschmelzklebstoffzusammensetzung.

Die Heissschmelzklebstoffzusammensetzung kann bei Bedarf zusätzlich weitere thermoplastische Polymere aufweisen. Dies sind insbesondere thermoplastische Polyester (TPE), thermoplastische Polyurethane (TPU) sowie Homo- oder Copolymere von mindestens einem Monomer, welches ausgewählt ist aus der Gruppe bestehend aus Ethylen, Propylen, Butylen, Isobutylen, Isopren, Vinylacetat, Vinylester höherer Carbonsäuren und Ester der (Meth)acrylsäure. Insbesondere geeignet als derartiges zusätzliches thermoplastisches Polymer sind Ethylenvinylacetat-Copolymere (EVA). Selbstverständlich können auch diese thermoplastischen Polymere gepfropft sein.

Die Heissschmelzklebstoffzusammensetzung enthält weiterhin bevorzugt mindestens einen Katalysator, welcher die Reaktion von Isocyanatgruppen und/oder Silangruppen katalysiert, insbesondere in einer Menge von 0.01 - 6.0 Gew.-%, bevorzugt von 0.01 - 5 Gew.-%, meist bevorzugt von 0.1 - 1.5 Gew.-%, bezogen auf die Heissschmelzklebstoffzusammensetzung. Als derartige Katalysatoren gelten insbesondere Phosphorsäureester oder Zinn-organische Verbindung, bevorzugt Dibutylzinndilaurat (DBTL).

Weiterhin kann die Heissschmelzklebstoffzusammensetzung weitere Bestandteile aufweisen. Als weitere Bestandteile geeignet sind insbesondere Bestandteile, welche ausgewählt sind aus der Gruppe umfassend Weichmacher, Haftvermittler, UV-Absorptionsmittel, UV- und Wärmestabilisatoren, optische Aufheller, Fungizide, Pigmente, Farbstoffe, Füllstoffe und Trocknungsmittel.

In einer besonders bevorzugten Ausführungsform weißt die Heissschmelzklebstoffzusammensetzung die folgende Zusammensetzung auf:
a) 30 - 95 Gewichts-%, insbesondere 35 - 95 Gewichts-%, bevorzugt 50 - 80 Gewichts-%, des thermoplastischen, bei 25°C festen silangepfropftes Poly-α-olefin **(P);**
b) 3 - 50 Gewichts-%, insbesondere 4 - 10 Gewichts-%, des Reaktionsproduktes **(RP)**
c) 0 - 60 Gewichts-%, insbesondere 1 - 30 Gewichts-%, mindestens eines Füllstoffes;
d) 0 - 5 Gewichts-%, insbesondere 0.05 - 2 Gewichts-%, vorzugsweise 0.07 - 1 Gewichts-%, mindestens eines Katalysators für die Hydrolyse der Silangruppen;
e) 0 - 30 Gewichts-%, insbesondere 5 - 30 Gewichts-%, vorzugsweise 8 - 20 Gewichts-%, mindestens eines Harzes **(H).**

Unter dem Einfluss von Wasser, insbesondere in Form von Luftfeuchtigkeit, hydrolysieren die Silangruppen des silangepfropften Poly-α-olefins **(P),** zu Silanolgruppen (-SiOH), welche ihrerseits miteinander reagieren und so unter Bildung von Siloxangruppen (-Si-O-Si-) zur Vernetzung der Heissschmelzklebstoffzusammensetzung führen. Derartige Heissschmelzktebstoffzusammensetzungen werden als reaktive Heissschmelzklebstoffe bezeichnet.

Es ist deshalb vorteilhaft, darauf zu achten, dass zur Herstellung der Heissschmelzklebstoffzusammensetzung Rohstoffe verwendet die möglichst gut getrocknet sind und dass die Klebstoffe während der Herstellung, Lagerung und Applikation möglichst vor dem Kontakt mit Wasser oder Luftfeuchtigkeit geschützt werden.

Grundsätzlich erfolgt die Herstellung auf übliche, dem Fachmann für Heissschmelzklebstoffe bekannte, Art und Weise.

Die Heissschmelzklebstoffzusammensetzungen werden durch Aufheizen verflüssigt, indem sich die thermoplastischen Inhaltsstoffe aufschmelzen. Die Viskosität der Heissschmelzklebstoffzusammensetzungen sollte angepasst sein auf die Applikationstemperatur. Typischerweise ist die Applikationstemperatur 100 bis 200 °C. Bei dieser Temperatur ist der Klebstoff gut verarbeitbar. Die Viskosität beträgt vorzugsweise in diesem Temperaturbereich 1'500 - 50'000 mPa·s. Ist sie wesentlich höher, ist die Applikation sehr schwierig. Ist sie wesentlich tiefer, ist der Klebstoff so dünnflüssig, so dass er bei der Applikation von der zu verklebenden Werkstoffoberfläche wegläuft, bevor er aufgrund des Abkühlens sich verfestigt.

Das durch die Abkühlung erfolgende Erstarren und Verfestigen des Klebstoffes bewirkt einen schnellen Festigkeitsaufbau und hohe Anfangshaftfestigkeit eines Klebverbundes. Es ist bei der Verwendung eines Klebstoffes darauf zu achten, dass das Verkleben innerhalb der Zeit erfolgt, in der der Klebstoff noch nicht zu stark abgekühlt ist, d.h. das Verkleben muss erfolgen, so lange der Klebstoff noch flüssig, bzw. zumindest noch klebrig und verformbar, ist. Zusätzlich zu dieser physikalischen Art der Verfestigung wird der Klebstoff auch nach dem Erkalten durch den Einfluss von Wasser, insbesondere von Luftfeuchtigkeit weitervemetzen und so innert einer kurzen Zeit von typischerweise wenigen Stunden oder Tage weiter an mechanischer Festigkeit gewinnen. Im Gegensatz zu den nicht reaktiven Heissschmelzklebstoffzusammensetzungen lassen sich reaktive Heissschmelzklebstoffzusammensetzungen nicht reversibel erhitzen und dadurch wieder verflüssigen. Somit ist der Einsatz derartiger Klebstoffe insbesondere für solche Anwendungen vorteilhaft, in welchen der verklebte Verbundkörper im Laufe seines Gebrauches, bzw. Lebens, in Kontakt mit hohen Temperaturen kommt ohne dass die Verklebung Schaden nimmt. Ebenso ist der Einsatz von derartigen Heissschmelzklebstoffen dahin gehend vorteilhaft, dass durch die Vernetzung bedingt, derartige Klebstoffe bedeutend weniger kriechen.

Es hat sich gezeigt, dass die beschriebenen erfindungsgemässen Heissschmelzklebstoffzusammensetzungen auch in dünnen Schichten eine verlängerte Offenzeit, d.h. eine Offenzeit von typischerweise mehreren, insbesondere von 3 bis 10, Minuten aufweisen, während der ein Fügen mit einem Fügepartner möglich ist. Der Klebstoff ist in der Lage, während der Offenzeit die Oberflächen der Fügepartner gut zu benetzen. Zudem baut sich schnell eine Frühfestigkeit auf, welche es erlaubt, dass der gebildete Klebverbund innert kurzer Zeit in der Lage ist Kräfte zu einem gewissen Mass zu übertragen. Als dünne Schichten werden in dem vorliegenden Dokument Klebstoffschichtdicken von weniger als 1 mm, typischerweise von 0.05 bis 0.5 mm, insbesondere um 0.1 mm, verstanden. Durch die Wasser-bedingte Vernetzungsreaktion lassen sich schliesslich sehr hohe Endfestigkeiten erreichen, welche typischerweise 1 bis 2 MPa betragen.

Die bevorzugten erfindungsgemässen Heissschmelzklebstoffzusammensetzungen sind frei von Isocyanaten und sind deshalb aufgrund von Aspekten der Arbeitshygiene und -sicherheit besonders vorteilhaft.

Sie weisen zudem ein äusserst breites Haftspektrum auf. Insbesondere lassen sich vielfach auch apolare Kunststoffe, wie Polyethylen oder Polypropylen, ohne Primer verkleben.

Insbesondere ist durch die verlängerte Offenzeit ein im Stand der Technik vielfach benötigtes "Reaktivieren" (Wiederaufschmelzen) des Klebstoffs vor dem Fügen mit der Oberfläche des Fügepartners nicht mehr nötig. Dies führt zu einem stark vereinfachten Klebeprozess, was selbstverständlich zusätzlich auch finanziellen Anreiz schafft, den erfindungsgemässen Klebstoff einzusetzen.

Es hat sich zudem gezeigt, dass die beschriebenen Heissschmelzklebstoffzusammensetzungen sehr lagerstabil sind, über gute Verarbeitungseigenschaften, insbesondere im Applikationstemperaturbereich von 100 bis 200°C, aufweisen und bei diesen Temperaturen auch über längere Zeit viskositätsstabil sind. Die Aushärtung erfolgt geruchsfrei, schnell und auch bei dickschichtigen Anwendungen ohne Blasen. Der Klebstoff zeichnet sich über gute Haftung und eine gute Beständigkeit gegenüber Umwelteinflüssen aus.

Es hat sich somit gezeigt, dass die vorgängig beschriebenen Heissschmelzklebstoffzusammensetzungen bestens zum Verkleben von Polyolefin-Folien oder Schäumen oder Textilien verwendet werden können.

Insbesondere bevorzugt werden sie als Kaschierklebstoffe zum Verkleben von Polyolefin-Folien oder Schäumen oder Textilien verwendet.

Weiterhin sind die Heissschmelzklebstoffzusammensetzungen auch sehr gut geeignet um Sandwich Panels zu kleben.

Es hat sich überraschenderweise herausgestellt, dass die beschriebenen Heissschmelzklebstoffe sowohl auf einer grossen Anzahl unterschiedlicher polaren als auch apolaren Substraten ausgezeichnet gut haften, auch in dünnen Schichten eine verlängerte Offenzeit aufweisen, trotzdem aber schnell eine grosse Frühfestigkeit aufbauen. Es hat sich weiterhin gezeigt, dass diese Heissschmelzklebstoffe insbesondere aber eine gute Haftung, insbesondere auch in Warm-Feucht-Lagerungen, über längere Zeit beibehalten. Weiterhin gewährleisten sie aufgrund der Vernetzung über ausserordentlich wärmestabile Klebverbunde, und somit sich insbesondere für Verklebungen eignen, wo der Klebverbund höheren Temperaturen ausgesetzt wird. Auch unter diesen Bedingungen bleibt der Verbund erhalten und es wird kein oder zumindest ein extrem geringes Kriechen auch bei länger andauernder Dauerbelastung auch bei höheren Temperaturen festgestellt.

Somit stellt die Verwendung der vorgängig im Detail beschriebenen Heissschmelzklebstoffzusammensetzung als Montageklebstoff, Kaschierklebstoff, Textilklebstoff, Möbelklebstoff oder als Klebstoff für den Bau von Sandwichelementen einen weiteren Aspekt der vorliegenden Erfindung dar.

Insbesondere interessant sind die Verwendungen in der Automobilindustrie.

Es hat sich gezeigt, dass die vorgängig beschriebene Heissschmelzklebstoffzusammensetzung insbesondere zum Verkleben von Polyolefinen insbesondere zum Verkleben von Substraten, insbesondere zum Verkleben von apolaren Substraten, vorzugsweise von Polyolefinen, mit polaren Substraten, vorzugsweise mit polaren Kunststoffen oder Metallen oder Glas verwendet werden können.

Als apolare Substrate sind insbesondere Kunststoffe, welche nicht polare Kunststoffe sind, wie zum Beispiel Polyolefine oder Polystyrol. Die bevorzugten apolaren Kunststoffe sind Polyolefine.

Als polarer Kunststoff werden insbesondere Kunststoffe verstanden, welche keine Gruppen aufweisen, welche ausgewählt sind aus der Gruppe bestehend aus Ester-, Säure-, Nitril-, Amino-, Alkohol-, Mercapto-. Urethan-, Harnstoff-, Amid-, Carbonat-, Sulfon-, Sulfonat-, Phosphon-, Phosponat-, Ether-, Amino-, Epoxid-, Phenol- und Nitrogruppen. Als polare Substrate sind insbesondere Holz, Poly(methylmethacrylat) (PMMA), Polycarbonat (PC), Polyvinylchlorid (PVC), Acrylonitril-Butadien-Styrol-Copolymer (ABS) und Polyamid (PA) geeignet.

Ein weiterer Aspekt der Erfindung betrifft einen Verbundkörper, welche erstes Substrat **(S1),** welches insbesondere ein Polyolefin ist, eine vorgängig beschriebene Heissschmelzklebstoffzusammensetzung **(K),** bzw. eine durch den Einfluss von Wasser vernetzte vorgängig beschriebene Heissschmelzklebstoffzusammensetzung **(K'),** sowie ein zweites Substrat **(S2),** welches insbesondere ein polarer Kunststoff oder Metall oder Glas, ist; aufweist.

Hierbei ist die Heissschmelzklebstoffzusammensetzung, bzw. die vernetzte Heissschmelzklebstoffzusammensetzung, zwischen ersten Substrat **(S1)** und zweiten Substrat **(S2)** angeordnet.

Als erstes Substrat **(S1)** ist insbesondere eine Polyolefnfolie bevorzugt.

Als "Polyolefin-Folie" werden insbesondere biegsame flächige Polyolefine in einer Dicke von 0.05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Polyolefin-Folien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein. Es ist dem Fachmann klar, dass auch Polyolefin-Folien auch noch andere Zusatzstoffe und Verarbeitungsmittel, wie Füllstoffe, UV- und Hitzestabilisatoren, Weichmacher, Gleitmittel, Biozide, Flammschutzmittel, Antioxidantien, Pigmente wie z.B. Titandioxid oder Russ, und Farbstoffe enthalten können. Das heisst, es werden auch derartige Folien als Polyolefin-Folien bezeichnet, welche nicht zu 100% aus Polyolefinen bestehen.

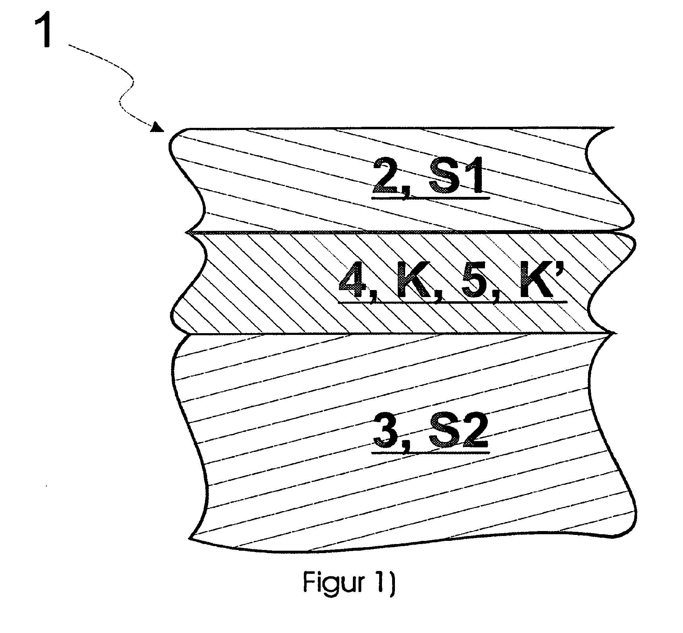

Figur 1 stellt schematisch einen derartigen Verbundkörper 1 dar, welcher ein erstes Substrat 2 **(S1)** und ein zweites Substrat 3 **(S2)** sowie eine Heissschmelzklebstoffzusammensetzung 4 **(K)**, bzw. eine durch den Einfluss von Wasser vernetzte Heissschmelzklebstoffzusammensetzung 5 **(K')**, weiche zwischen erstem und zweiten Substrat angeordnet ist und so diese zwei Substrate miteinander verklebt.

Das zweite Substrat **(S2)**, wird in der Anwendung der Kaschierung vielfach auch als Träger bezeichnet, kann von verschiedener Art und Natur sein. Die Substrate können beispielsweise aus Kunststoffen, insbesondere Polyolefine oder ABS, Metall, lackiertem Metall, aus Kunststoff, Holz, Holzwerkstoffen oder Fasermaterialien sein. Das Substrat ist vorzugsweise ein fester, geformter Körper.

Weiterhin bevorzugt ist das zweite Substrat **(S1)** ein Polypropylen.

Bei Bedarf kann die Oberfläche des zweiten Substrates **(S2)** vorbehandelt sein. Insbesondere kann eine derartige Vorbehandlung ein Reinigen oder ein Auftragen eines Primers darstellen. Bevorzugt ist jedoch das Aufbringen von Primern nicht notwendig.

Der beschriebene Verbundkörper ist vorzugsweise ein Artikel der industriellen Fertigung, insbesondere ein Artikel für den Innenausbau, bevorzugt ein Einbauteil in ein Transportmittel oder ein Artikel der Möbelbranche.

Besonders wichtig ist der Einsatz für die Herstellung von Innenauskleidungsteilen von Fahrzeugen, insbesondere von Automobilen. Bespiele für derartige Innenauskleidungsteile sind Türseitenteile, Schalttafeln, Hutablagen, Fertighimmel, Schiebehimrnel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen.

### Beispiele

**Tabelle 1. Charakterisierung der verwendeten Rohstoffe und deren Bezeichnung**

| | |
|---|---|
| ***P1*** | silangepfropftes Poly-α-olefin, |
| | Molekulargewicht (Mn): 10'600 g/mol, |
| | Schmelzviskosität (190°C, DIN 53 019): 5'000 mPa.s, |
| | Erweichungstemperatur (Ring & Kugel): 98°C |
| ***P2*** | Silangepfropfles Poly(propylen/ethylen) (Poly-α-olefin) (durch Metallocen-Katalyse erhalten) |
| | Schmelzviskosität (170°C DIN 53 018): ca. 100 mPa.s, |
| | Erweichungstemperatur (Ring & Kugel): 100°C |
| | Tropfpunkt: ca. 80°C |
| | Dichte: ca. 0.90 g/cm³ |
| | Silangehalt: ca.10 Gew.-% (Pfropfungsmittel:Vinyltriethoxysilan) |

### Herstellung Reaktionsprodukt: RP-1

Es wurde MDI (Desmodur 44 MC von Bayer) in einem Gefäss unter Stickstoff vorgelegt und aufgeschmolzen. Anschliessend wurde unter Rühren 3-Mercaptopropyltrimethoxysilan (Fluka) im Verhältnis von 1.05 Mol Mercaptogruppen zu 1 Mol Isocyanatgruppen zugetropft und gerührt bis keine Isocyanatgruppen mehr detektiert werden konnten. Diese Reaktionsmischung wurde anschliessend unter Stickstoff auf Raumtemperatur abgekühlt und so als Reaktionsprodukt ***RP-1*** für die Herstellung der Zusammensetzungen gemäss Tabelle 2 verwendet.

Es wurden Klebstoffzusammensetzungen hergestellt, indem die Inhaltsstoffe gemäss den in Tabelle 2 angegebenen Gewichtsteilen miteinander bei einer Temperatur von 150°C und unter Inertatmosphäre in einem Rührwerk vermengt wurden.

### Viskosität

Nach dem Aufschmelzen des jeweiligen Heissschmelzklebstoffes in einer verschlossenen Tube während 20 Minuten bei 140°C im Wärmeschrank wurden 9,7 g Klebstoff in eine Einweghülse abgewogen und während 20 Minuten im Viskosimeter bei der jeweiligen in Tabelle 2 angegebenen Temperatur temperiert. Die Messung der Viskosität erfolgte bei 160°C bei 10 Umdrehungen pro Minute auf einem Brookfield DV-2 Thermosel Viskosimeter mit Spindel Nr. 27. Als Viskosität wird derjenige Wert ausgewählt, der sich nach 5 Minuten Messung einstellt. In Tabelle 2 wird der gemessene Wert bei 160°C als "Visk₁₆₀" angegeben.

### Offenzeit

Der Heissschmelzklebstoff wurde auf 140°C aufgeschmolzen, etwa 20 g mittels Rakel in einer Schichtdicke von 500 µm und 60 mm Breite auf der silikonisierten Seite eines auf einer Heizplatte der Temperatur von 150°C liegenden Silikonisierten Papiers (B700 weiss, Laufenberg & Sohn, Deutschland) als Streifen von etwa 30 cm aufgetragen. Unmittelbar nach dem Klebstoff-Auftrag wurde das so beschichtete Papier auf eine bei 23°C konditionierte Buchenholzplatte gelegt. Nach regelmässigen Zeitabständen ("*t_{y}*") von 30 Sekunden wurde nun ein Streifen (10 cm x 1cm) des silikonisierten Papiers mit der Papierseite auf den Klebstoff aufgelegt, mit dem Finger kurz angepresst und langsam wieder abgezogen. Das Ende der Offenzeit wurde als diejenige Zeit, gemessen vom Zeitpunkt des Klebstoffauftrags, bestimmt, bei welcher der Klebstoff nicht mehr auf dem Deck-Papier haften bleibt.

### Haftung

Die Klebstofizusammensetzungen wurden auf 140°C aufgeschmolzen und als Rundraupe von 5 mm Höhe auf das jeweilige Substrat appliziert und während 7 Tagen bei 50% relativer Luftfeuchtigkeit und 23 °C ausgehärtet.

Dann wurde ein Spachtel einer Breite von 10 cm in den Grenzbereich von ausgehärtetem Klebstoff zu Substrat stirnseitig angesetzt und versucht mittels Anlegen von Handeskraft den Spachtel in diesen Grenzbereich einzustossen. Falls sich der Spachtel nicht in diesen Grenzbereich einstossen liess wurde diese Haftung als "gute Haftung" bezeichnet. Lies sich der Spachtel in diesen Grenzbereich einstossen und der Klebstoff platzte ab oder liess sich durch Anpacken mit den Fingern ohne grossen Kraftaufwand abziehen, wurde diese Haftung als "schlechte Haftung" bezeichnet. Lies sich der Spachtel in diesen Grenzbereich zwar einstossen und der Klebstoff liess sich durch Anpacken mit den Fingern jedoch nur unter grösserem Kraftaufwand abziehen, insbesondere abschälen, wurde diese Haftung als "mittlere Haftung" bezeichnet.

Es wurde die Haftung entsprechend auf den polaren und apolaren Untergründen Polypropylen (PP), Glasfaserverstärkter Kunststoff (GFK), Kiefernholz (Holz), Poly(methylmethacrylat) (PMMA), Polycarbonat (PC), Weich-Polyvinylchlorid (PVC), Acrylonitril-Butadien-Styrol-Copolymer (ABS) und Polyamid (PA) getestet.

Es ist hierbei aus den Resultaten der Tabelle 2 ersichtlich, dass die Beispiele ***1*** bis ***5*** ausserordentlich gute Haftung auf diversen apoloaren und polaren Untergründen aufweisen, während dies beim Vergleichsbeispiel ***Ref*. *1***, welches kein Reaktionsprodukt ***RP-1*** aufweist, nicht der Fall ist, insbesondere weisen sie auf den meisten polaren Untergründen keine gute Haftung auf.

**Tabelle 2 Heissschmelzklebstoffzusammensetzungen**

| | ***1*** | ***2*** | ***3*** | ***4*** | ***5*** | ***Ref.1*** |
|---|---|---|---|---|---|---|
| ***P1*** | 55 | 55 | 55 | 55 | 55 | 55 |
| Vestoplast® 408¹ | 25 | 25 | 25 | 25 | 25 | 25 |
| ***P2*** | 10 | 10 | 10 | 10 | 10 | 10 |
| Wingtack® 86 (Erweichungspunkt: 86°C) | 10 | 10 | 10 | 10 | 10 | 10 |
| Reaktionsprodukt ***RP-1*** | 0.5 | 1 | 3 | 10 | 25 | |
| Dibutylzinndilaurat | 0.1 | 0.1 | 0.1 | 0.1 | 0.1 | 0.1 |
| Visk₁₆₀ [m·Pas] | 6100 | 5900 | 6000 | 6500 | 7500 | 6200 |
| Offenzeit [s] | 90 | 100 | 100 | 90 | 90 | 150 |
| Anfangsfestigkeit nach 30 Min. [MPa] | 0.65 | 0.67 | 0.54 | 0.95 | 0.45 | 0.63 |
| Gute Haftung auf | PP,GFK, Holz, PMMA PC, ABS,PA | PP,GFK, Holz, PMMA PVC ABS,PA | PP,GFK, Holz, PMMA PC,PVC, ABS,PA | PP,GFK, Holz, PMMA PC,PVC, ABS,PA | PP,GFK, Holz, PMMA PC,PVC ABS,PA | PP GFK Holz |
| Mittlere Haftung auf | PVC | PC | | | | |
| Schlechte Haftung auf | | | | | | Holz, PMMA PC,PVC ABS,PA |

| | | | | | | |
|---|---|---|---|---|---|---|
| ¹ Vestoplast® 408, erhältlich von Evonik, ungepfropftes Poly-α-olefin | | | | | | |

### Bezugszeichenliste

1 Verbundkörper
2 erstes Substrat **(S1)**
3 zweites Substrat **(S1)**
4 Heissschmelzklebstoffzusammensetzung
5 durch den Einfluss von Wasser vernetzte Heissschmelzklebstoffzusammensetzung

## Patentansprüche

1. Heissschmelzklebstoffzusammensetzung umfassend
a) mindestens ein thermoplastisches, bei 25°C festes silangepfropftes Poly-α-olefin **(P);**
b) mindestens ein Reaktionsprodukt **(RP)** eines Polyisocyanates mit einem Isocyanat-reaktivem Silan **(S);**
wobei das Isocyanat-reaktive Silan **(S)** genau eine Isocyanatgruppen-reaktiven Gruppe, welche ausgewählt ist aus der Gruppen bestehend aus Hydroxylgruppe, Mercaptogruppe und Aminogruppe, aufweist und wobei das Reaktionsprodukt ein Molekulargewicht M_{w} von weniger als 1'500 g/mol aufweist.

2. Heissschmelzklebstoffzusammensetzung gemäss Anspruch 1, **dadurch gekennzeichnet, dass** das silangepfropfte Poly-α-olefin **(P)** eine Erweichungstemperatur zwischen 60°C und 160°C, insbesondere zwischen 80°C und 140°C, bevorzugt zwischen 90°C und 120°C, aufweist.

3. Heissschmelzklebstoffzusammensetzung gemäss Anspruch 1 oder 2, **dadurch gekennzeichnet, dass** das silangepfropfte Poly-α-olefin **(P)** ein silangepfropftes Copolymer oder Terpolymer aus mindestens einem der Monomeren, welche ausgewählt sind aus der Gruppe bestehend aus Ethylen, Propylen, Butylen und Isobutylen.

4. Heissschmelzklebstoffzusammensetzung gemäss einem der vorhergehenden Ansprüche, **dadurch gekennzeichnet, dass** das silangepfropfte Poly-α-olefin **(P)** ein silangepfropftes ataktisches Poly-α-olefin (APAO) ist.

5. Heissschmelzklebstoffzusammensetzung gemäss einem der vorhergehenden Ansprüche, **dadurch gekennzeichnet, dass** das Poly-α-olefin **(P)** durch Aufpfropfung von Silanen auf ein Poly-α-olefin, welches seinerseits nach dem Ziegler-Natta-Verfahren hergestellt wurde, hergestellt wurde.

6. Heissschmelzklebstoffzusammensetzung gemäss einem der vorhergehenden Ansprüche, **dadurch gekennzeichnet, dass** die Heissschmelzklebstoffzusammensetzung mindestens zwei verschiedene silangepfropfte Poly-α-olefine **(P)** aufweist.

7. Heissschmelzklebstoffzusammensetzung gemäss einem der vorhergehenden Ansprüche, **dadurch gekennzeichnet, dass** das Isocyanat-reaktive Silan (S) eine Verbindung der Formel (I) ist: 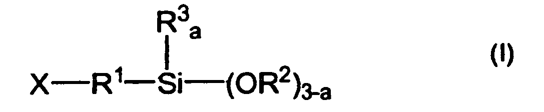 wobei
R¹ für eine lineare oder verzweigte, gegebenenfalls cyclische, Alkylengruppe mit 1 bis 20 C-Atomen steht, gegebenenfalls mit aromatischen Anteilen, steht;
R² für eine Alkylgruppe mit 1 bis 5 C-Atomen, insbesondere für eine Methyl- oder Ethylgruppe, oder eine Acylgruppe steht,
R³ für eine Alkylgruppe mit 1 bis 8 C-Atomen, insbesondere für eine Methylgruppe, steht
a für einen der Werte 0, 1 oder 2, bevorzugt 0 oder 1, steht;
X für eine Isocyanat-reaktive Gruppe steht, welche ausgewählt ist aus der Gruppe bestehend aus -OH, -SH, -NH₂ und -NHR⁴,
wobei R⁴
entweder
für einen Alkylrest mit 1 bis 12 C-Atomen oder für einen cycloaliphatischen oder aromatischen Rest mit 6 bis 12 C-Atomen
oder für einen Substituent der Formel (II) steht

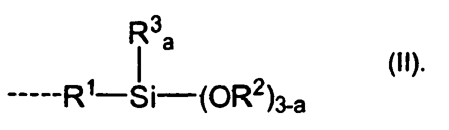

8. Heissschmelzklebstoffzusammensetzung gemäss einem der vorhergehenden Ansprüche, **dadurch gekennzeichnet, dass** das für die Herstellung des Reaktionsproduktes **(RP)** eingesetzte Polyisocyanat ausgewählt ist aus der Gruppe bestehend aus 4,4'-, 2,4'- und 2,2'-Diphenylmethandiisocyanat (MDI), 2,4- und 2,6-Toluylendüsocyanat (TDI), 1,6-Hexamethylendiisocyanat (HDI), 1-Isocyanato-3,3,5-trimethyl-5-isocyanatomethyl-cyclohexan (=Isophorondiisocyanat oder IPDI); Isocyanurate von MDI, TDI, HDI oder IPDI, sowie Biurete von MDI, TDI, HDI und/oder IPDI.

9. Heissschmelzklebstoffzusammensetzung gemäss einem der vorhergehenden Ansprüche, **dadurch gekennzeichnet, dass** das Reaktionsproduktes **(RP)** ein Reaktionsprodukt von 4,4'-, 2,4'- oder 2,2'-Diphenylmethandilsocyanat (MDI) mit einem 3-Mercaptopropyltrimethoxysilan, 3-Mercaptopropyltriethoxysilan oder 3-Mercaptopropyldimethoxymethylsilan ist.

10. Heissschmelzklebstoffzusammensetzung gemäss einem der vorhergehenden Ansprüche, **dadurch gekennzeichnet, dass** das Reaktionsprodukt **(RP)** eines Polyisocyanates mit einem Isocyanat-reaktiven Silan **(S)** keine Isocyanatgruppen aufweist

11. Heissschmelzklebstoffzusammensetzung gemäss einem der vorhergehenden Ansprüche, **dadurch gekennzeichnet, dass** die Heissschmelzklebstoffzusammensetzung weiterhin mindestens einen Haftvermittler der Formel (III) aufweist 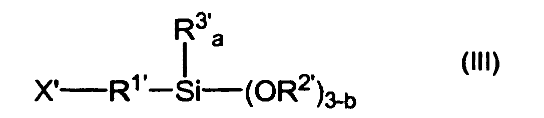 wobei
R^{1'} für eine lineare oder verzweigte, gegebenenfalls cyclische, Alkylengruppe mit 1 bis 20 C-Atomen steht, gegebenenfalls mit aromatischen Anteilen und/oder Heteroatomen, insbesondere in Form von Amin-Stickstoffatomen, steht;
R^{2'} für eine Alkylgruppe mit 1 bis 5 C-Atomen, insbesondere für eine Methyl- oder Ethylgruppe, oder eine Acylgruppe steht,
R^{3'} für eine Alkylgruppe mit 1 bis 8 C-Atomen, insbesondere für eine Methylgruppe, steht
b für einen der Werte 0, 1 oder 2, bevorzugt 0 oder 1, steht;
X' für eine Gruppe steht, welche ausgewählt ist aus der Gruppe bestehend aus -OH, -SH, -NH₂, -NHR^{4'}, Glycidyloxy-, (Meth)acryloxy-, Acylthio- und Vinylgruppe;
wobei R^{4'}
entweder
für einen Alkylrest mit 1 bis 12 C-Atomen oder für einen cycloaliphatischen oder aromatischen Rest mit 6 bis 12 C-Atomen
oder für einen Substituent der Formel (IV) steht

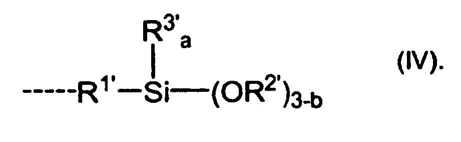

12. Heissschmelzklebstoffzusammensetzung gemäss einem der vorhergehenden Ansprüche, **dadurch gekennzeichnet, dass** die Heissschmelzklebstoffzusammensetzung weiterhin mindestens ein silanfunktionelles Polyoxyalkylen-Prepolymer enthält.

13. Heissschmelzklebstoffzusammensetzung gemäss einem der Ansprüche 1 bis 10, **dadurch gekennzeichnet, dass** die Heissschmelzklebstoffzusammensetzung die folgende Zusammensetzung aufweist:
a) 30 - 95 Gewichts-%, insbesondere 35 - 95 Gewichts-%, bevorzugt 50 - 80 Gewichts-%, des thermoplastischen, bei 25°C festen silangepfropftes Poly-α-olefin **(P)**;
b) 3 - 50 Gewichts-%, insbesondere 4 - 10 Gewichts-%, des Reaktionsproduktes **(RP)**
c) 0 - 60 Gewichts-%, insbesondere 1 - 30 Gewichts-%, mindestens eines Füllstoffes;
d) 0 - 5 Gewichts-%, insbesondere 0.05 - 2 Gewichts-%, vorzugsweise 0.07 - 1 Gewichts-%, mindestens eines Katalysators für die Hydrolyse der Silangruppen;
e) 0 - 30 Gewichts-%, insbesondere 5 - 30 Gewichts-%, vorzugsweise 8 - 20 Gewichts-%, mindestens eines Harzes **(H).**

14. Verwendung einer Heissschmelzklebstoffzusammensetzung gemäss einem der Ansprüche 1 bis 13 als Montageklebstoff, Kaschierklebstoff, Textilklebstoff, Möbelklebstoff oder als Klebstoff für den Bau von Sandwichelementen.

15. Verwendung einer Heissschmelzklebstoffzusammensetzung gemäss einem der Ansprüche 1 bis 13 zum Verkleben von Substraten, insbesondere zum Verkleben von apolaren Substraten, vorzugsweise von Polyolefinen, mit polaren Substraten, vorzugsweise mit polaren Kunststoffen oder Metallen oder Glas.

16. Verbundkörper (1) aufweisend
- ein erstes Substrat (2, S1), welches ein insbesondere ein Polyolefin ist;
- eine Heissschmelzklebstoffzusammensetzung (4) gemäss einem der Ansprüche 1 bis 13, bzw. eine durch den Einfluss von Wasser vernetzte Heissschmelzklebstoffzusammensetzung (5) gemäss einem der Ansprüche 1 bis 13, sowie
- ein zweites Substrat (3, S2), welches insbesondere ein polarer Kunststoff oder Metall oder Glas, ist;
wobei der die Heissschmelzklebstoffzusammensetzung, bzw. die vernetzte Heissschmelzklebstoffzusammensetzung, zwischen erstem Substrat **(S1)** und Substrat **(S2)** angeordnet ist

## Claims

1. A hot-melt adhesive composition comprising
a) at least one thermoplastic, silane-grafted poly-α-olefin **(P)** which is solid at 25°C;
b) at least one reaction product **(RP)** of a polyisocyanate with an isocyanate-reactive silane **(S)**;
wherein the isocyanate-reactive silane **(S)** contains exactly one isocyanate group-reactive group selected from the groups consisting of a hydroxyl group, a mercapto group and an amino group and wherein the reaction product has a molecular weight M_{w} of less than 1,500 g/mol.

2. The hot-melt adhesive composition according to claim 1, **characterized in that** the silane-grafted poly-α-olefin **(P)** has a softening temperature between 60°C and 160°C, in particular between 80°C and 140°C, preferably between 90°C and 120°C.

3. The hot-melt adhesive composition according to claim 1 or 2, **characterized in that** the silane-grafted poly-α-olefin **(P)** is a silane-grafted copolymer or terpolymer of at least one of the monomers selected from the group consisting of ethylene, propylene, butylene and isobutylene.

4. The hot-melt adhesive composition according to any one of the preceding claims, **characterized in that** the silane-grafted poly-α-olefin **(P)** is a silane-grafted atactic poly-α-olefin (APAO).

5. The hot-melt adhesive composition according to any one of the preceding claims, **characterized in that** the poly-α-olefin **(P)** was manufactured by grafting silanes onto a poly-α-olefin which in turn was produced by the Ziegler-Natta process.

6. The hot-melt adhesive composition according to any one of the preceding claims, **characterized in that** the hot-melt adhesive composition contains at least two different silane-grafted poly-α-olefins **(P).**

7. The hot-melt adhesive composition according to any one of the preceding claims, **characterized in that** the isocyanate-reactive silane (**S**) is a compound of the formula (I): 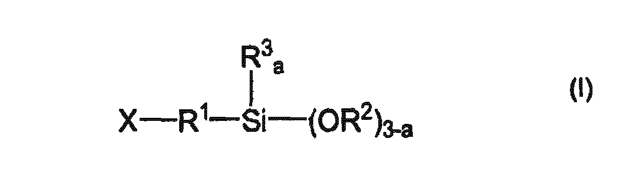 where
R¹ represents a linear or branched, optionally cyclic alkylene group having from 1 to 20 C atoms, optionally with aromatic proportions;
R² represents an alkyl group having from 1 to 5 C atoms, in particular a methyl or ethyl group or an acyl group;
R³ represents an alkyl group having from 1 to 8 C atoms, in particular a methyl group;
a represents one of the values of 0, 1 or 2, preferably 0 or 1;
X represents an isocyanate-reactive group selected from the group consisting of -OH, -SH, -NH₂ and -NHR⁴,
where R⁴
either
represents an alkyl moiety having from 1 to 12 C atoms or a cycloaliphatic or aromatic moiety having from 6 to 12 C atoms
or a substituent of the formula (II)

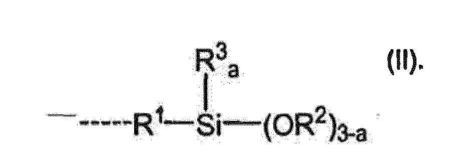

8. The hot-melt adhesive composition according to any one of the preceding claims, **characterized in that** the polyisocyanate used for the manufacture of the reaction product (**RP**) is selected from the group consisting of 4,4'-, 2,4'- and 2,2'-diphenylmethane diisocyanate (MDI), 2,4- and 2,6-toluylene diisocyanate (TDI), 1,6-hexamethylene diisocyanate (HDI), 1-isocyanato-3,3,5-trimethyl-5-isocyanatomethylcyclohexane (= isophorone diisocyanate or IPDI); isocyanurates of MDI, TDI, HDI or IPDI, as well as biurets of MDI, TDI, HDI and/or IPDI.

9. The hot-melt adhesive composition according to any one of the preceding claims, **characterized in that** the reaction product **(RP)** is a reaction product of 4,4'-, 2,4'- or 2,2'-diphenylmethane diisocyanate (MDI) with a 3-mercaptopropyltrimethoxysilane, 3-mercaptopropyltriethoxysilane or 3-mercaptopropyldimethoxymethylsilane.

10. The hot-melt adhesive composition according to any one of the preceding claims, **characterized in that** the reaction product **(RP)** of a polyisocyanate with an isocyanate-reactive silane **(S)** does not contain isocyanate groups.

11. The hot-melt adhesive composition according to any one of the preceding claims, **characterized in that** the hot-melt adhesive composition further contains at least one adhesion promotor of the formula (III) 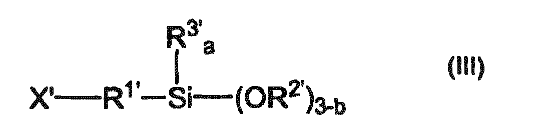 where
R^{1'} represents a linear or branched, optionally cyclic alkylene group having from 1 to 20 C atoms, optionally with aromatic proportions and/or hetero atoms, in particular in the form of amine nitrogen atoms;
R^{2'} represents an alkyl group having from 1 to 5 C atoms, in particular a methyl or ethyl group or an acyl group;
R^{3'} represents an alkyl group having from 1 to 8 C atoms, in particular a methyl group;
b represents one of the values of 0, 1 or 2, preferably 0 or 1;
X' represents a group selected from the group consisting of -OH, -SH, -NH₂, -NHR^{4'}, a glycidyloxy, (meth)acryloxy, acylthio and vinyl group;
where R^{4'}
either
represents an alkyl moiety having from 1 to 12 C atoms or a cycloaliphatic or aromatic moiety having from 6 to 12 C atoms
or a substituent of the formula (IV)

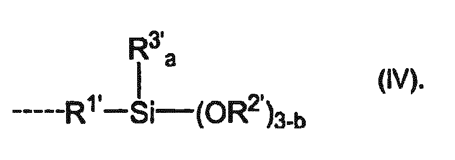

12. The hot-melt adhesive composition according to any one of the preceding claims, **characterized in that** the hot-melt adhesive composition further contains at least one silane-functional polyoxyalkylene prepolymer.

13. The hot-melt adhesive composition according to any one of claims 1 to 10, **characterized in that** the hot-melt adhesive composition has the following composition:
a) 30 - 95% by weight, in particular 35 - 95% by weight, preferably 50 - 80% by weight of the thermoplastic, silane-grafted poly-α-olefin (P) which is solid at 25°C;
b) 3 - 50% by weight, in particular 4 - 10% by weight of the reaction product **(RP);**
c) 0 - 60% by weight, in particular 1 - 30% by weight, of at least one filler;
d) 0 - 5% by weight, in particular 0.05 - 2% by weight, preferably 0.07 - 1% by weight of at least one catalyst for the hydrolysis of the silane groups;
e) 0 - 30% by weight, in particular 5 - 30% by weight, preferably 8 - 20% by weight of at least one resin **(H).**

14. Use of a hot-melt adhesive composition according to any one of claims 1 to 13 as assembly adhesive, laminating adhesive, textile adhesive, furniture adhesive or as adhesive for manufacturing sandwich elements.

15. Use of a hot-melt adhesive composition according to any one of claims 1 to 13 for adhesively bonding substrates, in particular for adhesively bonding apolar substrates, preferably polyolefins, to polar substrates, preferably to polar plastics or metals or glass.

16. A composite body (1) comprising
- a first substrate (2, **S1)** which is in particular a polyolefin;
- a hot-melt adhesive composition (4) according to any one of claims 1 to 13 or a hot-melt adhesive composition (5) according to any one of claims 1 to 13 crosslinked under the influence of water and
- a second substrate (3, **S2)** which is in particular a polar plastic or metal or glass;
wherein the hot-melt adhesive composition or the crosslinked hot-melt adhesive composition is arranged between the first substrate **(S1)** and the substrate **(S2).**

## Revendications

1. Composition d'adhésif thermofusible comprenant
a) au moins une poly-α-oléfine (P) thermofusible silanisée, solide à 25 °C ;
b) au moins un produit de réaction (RP) d'un polyisocyanate avec un silane réactif avec les isocyanates (S) ;
dans quel cas le silane réactif avec les isocyanates (S) possède exactement une fonction réagissant avec les groupes isocyanate étant choisie parmi les groupes composés du groupe hydroxyle, du groupe mercapto et du groupe des amines et dans quel cas le produit de réaction possède une masse moléculaire M_{w} inférieure à 1 500 g/mol.

2. Composition d'adhésif thermofusible selon la revendication 1, **caractérisée par le fait que** la poly-α-oléfine (P) silanisée présente un point de ramollissement entre 60 °C et 160 °C, et particulièrement entre 80 °C et 140 °C, de préférence entre 90 °C et 120 °C.

3. Composition d'adhésif thermofusible selon la revendication 1 ou 2, **caractérisée par le fait que** la poly-α-oléfine (P) silanisée est un copolymère ou terpolymère silanisé composé d'au moins l'un des monomères parmi le groupe composé d'éthylène, de propylène, de butylène et d'isobutylène.

4. Composition d'adhésif thermofusible selon l'une des revendications précédentes, **caractérisée par le fait que** la poly-α-oléfine (P) silanisée est une poly-α-oléfine atactique silanisée (APAO).

5. Composition d'adhésif thermofusible selon une des revendications précédentes, **caractérisée par le fait que** la poly-α-oléfine (P) a été réalisée par le greffage de silanes sur une poly-α-oléfine elle-même produite selon le procédé de Ziegler-Natta.

6. Composition d'adhésif thermofusible selon l'une des revendications précédentes, **caractérisée par le fait que** la composition d'adhésif thermofusible comporte au moins deux poly-α-oléfines (P) silanisées différentes.

7. Composition d'adhésif thermofusible selon l'une des revendications précédentes, **caractérisée par le fait que** le silane réagissant avec les isocyanates (S) est un composé selon la formule (I) : 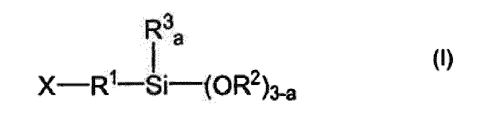 dans quel cas
R¹ correspond à un radical alkylène linéaire ou ramifié, le cas échéant cyclique, avec 1 à 20 atomes de carbone, le cas échéant avec des composantes aromatiques ;
R² correspond à un groupe alkyle avec 1 à 5 atomes de carbone, notamment pour un groupement méthyle ou éthyle, ou à un groupement acyle ;
R³ correspond à un groupe alkyle avec 1 à 8 atomes de carbone, notamment pour un groupe méthyle ;
a correspond à une des valeurs 0, 1 ou 2, de préférence 0 ou 1 ;
x correspond à un groupe réagissant aux isocyanates sélectionné parmi le groupe composé de -OH, -SH, -NH₂ et -NHR⁴,
dans quel cas R⁴ correspond
soit
à un radical alkyle avec 1 à 12 atomes de carbone ou à un résidu cycloaliphatique ou aromatique avec 6 à 12 atomes de carbone soit
à un substituant selon la formule (II)

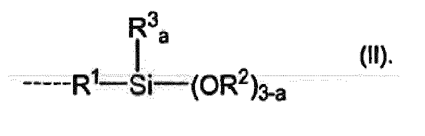

8. Composition d'adhésif thermofusible selon l'une des revendications précédentes, **caractérisée par le fait que** le polyisocyanate utilisé pour la réalisation du produit de réaction (RP) est sélectionné parmi les groupes composés de 4,4'-, 2,4'- et 2,2'-diisocyanate de diphénylméthane (MDI), 2,4- et 2,6-diisocyanate de toluène (TDI), 1,6-diisocyanate d'hexaméthylène (HDI), 1-isocyanato-3,3,5-triméthyl-5-isocyanatométhyle-cyclohexane (= isophorone diisocyanate ou IPDI), d'isocyanurate de MDI, TDI, HDI ou IPDI, ainsi que des MDI-, TDI-, HDI- et/ou IPDI-biurets.

9. Composition d'adhésif thermofusible selon l'une des revendications précédentes, **caractérisée par le fait que** le produit de réaction (RP) est un produit de réaction de 4,4'-, 2,4'- et 2,2'-diisocyanate de diphénylméthane (MDI) avec un 3-mercaptopropyletriméthoxysilane, 3-mercaptopropyletriéthoxysilane ou 3-mercaptopropylediméthoxyméthylesilane.

10. Composition d'adhésif thermofusible selon l'une des revendications précédentes, **caractérisée par le fait que** le produit de réaction (RP) d'un polyisocyanate avec un silane réagissant aux isocyanates (S) ne présente pas de groupements isocyanate.

11. Composition d'adhésif thermofusible selon l'une des revendications précédentes, **caractérisée par le fait que** la composition d'adhésif thermofusible présente toujours au moins un liant selon la formule (III) 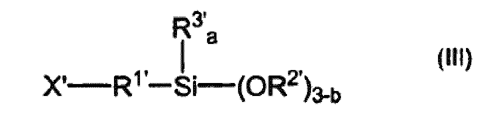 dans quel cas
R¹ correspond à un groupement alkylène linéaire ou ramifié, le cas échéant cyclique, avec 1 à 20 atomes de carbone, le cas échéant avec des composantes aromatiques et/ou des hétéroatomes, notamment sous forme d'atomes d'azote aminé ;
R² correspond à un radical alkyle avec 1 à 5 atomes de carbone, notamment pour un groupement méthyle ou éthyle, ou à un groupement acyle ;
R³ correspond à un radical alkyle avec 1 à 8 atomes de carbone, notamment pour un groupement méthyle ;
b correspond à une des valeurs 0, 1 ou 2, de préférence 0 ou 1 ;
X' correspond à un groupe sélectionné parmi le groupe composé des groupes -OH, - SH, -NH₂, -NHR⁴ et groupes glycidyloxique, (méth)acryloxique, acylthioique et vinylique
dans quel cas R⁴ correspond
soit
à un radical alkyle avec 1 à 12 atomes de carbone ou à un radical cycloaliphatique ou aromatique avec 6 à 12 atomes de carbone
soit
à un substituant selon la formule (IV)

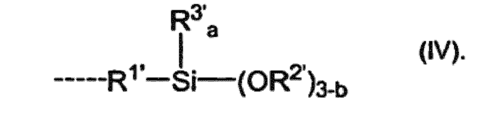

12. Composition d'adhésif thermofusible selon l'une des revendications précédentes, **caractérisée par le fait que** la composition d'adhésif thermofusible contient toujours au moins un prépolymère de polyoxyalkylène à fonctionnalité silane.

13. Composition d'adhésif thermofusible selon l'une des revendications précédentes, **caractérisée par le fait que** la composition d'adhésif thermofusible présente la composition suivante :
a) 30 - 95 % massiques, en particulier 35 - 95 % massiques, de préférence 50 - 80 % massiques de la poly-α-oléfine (P) silanisée thermofusible, solide à 25 °C ;
b) 3 - 50 % massiques, en particulier 4 - 10 % massiques du produit de réaction (RP) ;
c) 0 - 60 % massiques, en particulier 1 - 30 % massiques de charges ;
d) 0 - 5 % massiques, en particulier 0,05 - 2 % massiques, de préférence 0,07 - 1 % massique d'au moins un catalyseur pour l'hydrolyse des groupes de silane ;
e) 0 - 30 % massiques, en particulier 5 - 30 % massiques, de préférence 8 - 20 % massiques d'au moins une résine (H).

14. Utilisation d'une composition d'adhésif thermofusible selon l'une des revendications 1 à 13 en tant qu'adhésif de montage, adhésif de laminage, adhésif pour produits textiles, adhésif pour meubles ou adhésif pour la construction d'éléments laminés-collés.

15. Utilisation d'une composition d'adhésif thermofusible selon l'une des revendications 1 à 13 pour le collage de substrats, en particulier pour le collage de substrats apolaires, de préférence de polyoléfines, sur des substrats polaires, de préférence des matières plastiques polaires, des métaux ou du verre.

16. Matière composite (1) présentant
• un premier substrat (2, S1), qui est notamment une polyoléfine ;
• une composition d'adhésif thermofusible (4) selon l'une des revendications 1 à 13, ou une composition d'adhésif thermofusible réticulée à l'eau (5) selon l'une des revendications 1 à 13 ; ainsi que
• un second substrat (3, S2), qui est tout particulièrement une matière plastique polaire, un métal ou du verre ;
dans laquelle la composition d'adhésif thermofusible ou la composition d'adhésif thermofusible réticulée à l'eau est disposée entre le premier substrat (S1) et le substrat (S2).
